# EUROPEAN PATENT SPECIFICATION

(11) **EP 2 017 113 B1**
(45) Date of publication and mention of the grant of the patent: **22.05.2013**
(21) Application number: 08157543.3
(22) Date of filing: 04.06.2008
(51) Int. Cl.: B60K 15/06

(54) **Method and system for fitting one or more additional tanks to a tank of an industrial or commercial vehicle**
Verfahren und System zum Anpassen eines oder mehrerer zusätzlicher Tanks an einen Tank eines industriellen oder gewerblichen Fahrzeugs
Procédé et système d'ajustement d'un ou plusieurs réservoirs sur un réservoir d'un véhicule industriel ou commercial

(30) Priority: 06.06.2007 IT MI20071156
(43) Date of publication of application: 21.01.2009
(73) Proprietor: IVECO S.p.A., 10156 Torino (IT)
(72) Inventor: Venni, Silvio, 25046, Cazzago S. Martino (IT)
(74) Representative: Borsano, Corrado

(56) References cited:
- EP-A- 1 645 452
- EP-A- 1 736 350
- WO-A-93/12946
- US-B1- 6 223 526

## Description

The present invention relates to a method and system for fitting one or more additional tanks to a tank of an industrial or commercial vehicle.

For industrial or commercial vehicles it is increasingly important to reduce the overall dimensions and optimize production processes.

As far as fluid tanks are concerned, their number increases as the "industrial vehicle" machine becomes more complex and, in addition to transporting goods, is required to fulfil other related functions, such as ensuring comfort, providing tanks for water or fulfilling other functions as required by fitters, for instance to meet environmental standards as in the case of the new propulsion systems with reduced environmental impact. For instance one new requirement concerns the space required to house one or more additional tanks, for instance the urea tank, which is essential for latest generation diesel engines to operate, or tanks of water for the driver or arrangements for other liquids installed by the fitter to hold oil, detergent, etc. An example of a vehicle comprising an additional tank fitted on a main tank is disclosed in the patent application EP A 1736350.

Therefore the purpose of the present invention is to describe a method and system for fitting one or more additional tanks to a tank of an industrial or commercial vehicle which reduces the overall amount of space that is taken up, reduces the number of additional supports, and also the time and costs involved in production.

The present invention relates to a method and relative system for fitting one or more additional tanks to a tank of an industrial or commercial vehicle, characterized in that this is achieved by means of one or more "dovetail" couplings between said tank and said one or more additional tanks, on one or more facing walls between said tank and one or more additional tanks.

The invention relates in particular to a method and system for fitting one or more additional tanks to a tank of an industrial or commercial vehicle, as described more fully in the claims, which are an integral part of this description.

Further purposes and advantages of this invention will become apparent from the following detailed description of a preferred embodiment thereof (and the relative alternative embodiments) and the drawings that are attached hereto, which are merely illustrative and not limitative, in which:
figures 1 and 2 are two isometric views of the system for fitting an additional tank to a main tank, according to the present invention, before inserting the additional tank into the main tank;
figure 3 is an isometric view of the coupling system shown in figures 1 and 2, after inserting the additional tank into the main tank;
figure 4 shows an alternative embodiment of the coupling system.

In the figures the same reference numbers are used to indicate the same components.

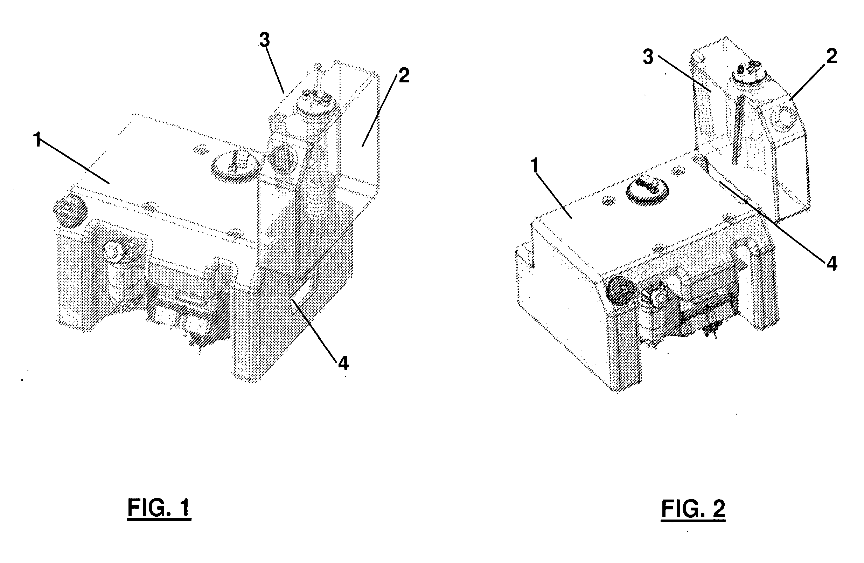

In figures 1 and 2, number 1 indicates a main tank of an industrial or commercial vehicle, said tank being basically parallelepiped in shape, for example a diesel tank, while number 2 indicates an additional tank of an industrial or commercial vehicle, said additional tank also being basically parallelepiped in shape, for example a tank for urea.

The two tanks are fitted together preferably by means of a "dovetail" coupling with vertical bayonet joint 3, 4, on the facing side walls of the two tanks.

One of the two parts of the coupling, for example that on the main tank 1, comprises a blind trapeziform recess 4 in the side wall of the tank, which starts at its widest part on the upper edge of the wall, continues on the wall with two convergent edges, and ends on the same wall, in a blind end. The convergent side walls are shaped so as to achieve a coupling, in that they are provided with notch-type recesses with respect to the outside edges.

The other part of the coupling, for example on the additional tank 2, comprises a shape that is complementary to that of the wall of the tank 1, in that the side wall of the tank of provided with a trapeziform protuberance 3, which starts at its widest part on the upper edge of the wall, continues on the wall with two convergent edges, and ends on the same wall, in a blind end. The convergent side walls are shaped so as to achieve a coupling, in that they are provided with divergent raised protuberances, complementary to the notch-type recess on the main tank 1.

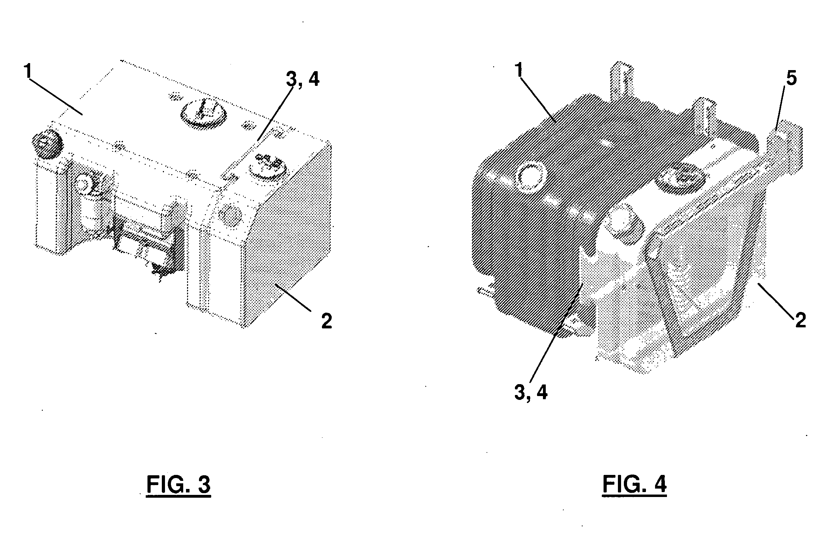

During assembly, the additional tank 2 is arranged so as to face the main tank 1 laterally and superiorly, the two complementary forms of the coupling are brought together and the protuberance 4 is inserted completely into the recess 3, to achieve the stable and effective coupling as illustrated in fig. 3.

There is generally no need for any extra supports for the additional tank 2, since the coupling 3, 4 is sufficient to hold the additional tank in place cantilevered sideways from the side of the main tank 1.

The only design requirement is that the shape and dimensions of the two side walls of the two tanks must be equal and complementary, in order to obtain the best coupling.

Figure 4 illustrates an alternative embodiment in which the tanks are fitted together in a similar way but by means of a horizontal coupling instead of a vertical coupling. This alternative is useful in cases in which there is not enough space above the main tank to fit the additional tank, without removing the main tank, for example due to the presence of a fixed trailer only a small distance above the tanks. In this case there may be an extra bracket 5 to support the additional tank, to prevent it from slipping forwards and leaving its seat.

In any case the use of a dovetail coupling (whether from the top or side) makes it possible to eliminate two brackets, or just one bracket if the additional tank is too heavy.

It will be apparent to the person skilled in the art that other alternative and equivalent embodiments of the invention can be conceived and reduced to practice without departing from the true spirit of the invention.

For example several additional tanks can be inserted in series, with similar "dovetail" couplings, to be achieved on the corresponding facing walls.

The couplings can be achieved on more than one wall of the main tank, for example on the side walls and/or upper and/or lower walls, with vertical or horizontal couplings.

The "dovetail" couplings can also be of the through type, that is they can occupy the whole of the facing walls, starting from one edge of the wall and ending on the opposite edge.

The recessed part of the "dovetail" couplings can be on either of the two facing walls, and the corresponding protruding part on the other wall.

The extra supporting brackets are not always necessary, but are useful if the additional tanks are too heavy to be supported by the main tank alone.

The advantages deriving from the application of the present invention are clear.

A reduction in the overall dimensions of the components and fastenings is obtained, for example by eliminating one or more of the supports for the additional tanks, since the main tank also supports the others; moreover the use of a preassembled tank improves the assembly process on the production line and cuts assembly times.

From the description set forth above it will be possible for the person skilled in the art to embody the invention without introducing any further construction details.

## Claims

1. Method of fitting one or more additional tanks to a tank of an industrial or commercial vehicle, said method being achieved by means of one or more "dovetail" couplings between said tank (1) and said one or more additional tanks (2), on one or more facing walls between said tank and one or more additional tanks, **characterised in that** for at least one coupling:
- one of the part of the coupling comprises a blind trapeziform recess in a side wall of said tank (1), which starts at its widest part on one edge of the wall, continues on the wall with two convergent edges and ends on the same wall in a blind end, convergent walls being shaped so as to achieve a coupling , **in that** they are provided with notch-type recess with respect to the outside edges;
- the other part of the coupling comprises a shape on a side wall on the additional tank (2) that is complementary to that of the wall of the tank (1), said wall of the additional tank being provided with a trapeziform protuberance (3), which starts at its widest part of one edge of the side wall, continues on the wall with two convergent edges, and ends on thee same wall in a blind end, the convergent side walls being shaped so as to achieve a coupling, **in that** they are provided with divergent raised protuberances, complementary to the notch-type recess on the main tank.

2. System for fitting one or more additional tanks to a tank of an industrial or commercial vehicle, said system comprising one or more "dovetail" couplings (3, 4) between said tank (1) and said one or more additional tanks (2), on one or more facing walls between said tank and one or more additional tanks, **characterised in that** at least one of said couplings (3,4) comprises:
- a first part comprising a blind trapeziform recess in a side wall of said tank (1), which starts at its widest part on one edge of the wall, continues on the wall with two convergent edges and ends on the same wall in a blind end, convergent walls being shaped so as to achieve a coupling , **in that** they are provided with notch-type recess with respect to the outside edges;
- a second part comprising a shape on a side wall on the additional tank (2) that is complementary to that of the wall of the tank (1), said wall of the additional tank being provided with a trapeziform protuberance (3), which starts at its widest part of one edge of the side wall, continues on the wall with two convergent edges, and ends on thee same wall in a blind end, said convergent side wall being shaped so as to achieve a coupling, **in that** they are provided with divergent raised protuberances, complementary to the notch-type recess on the main tank.

3. System for fitting according to claim 2, **characterized in that** said one or more couplings (3, 4) are achieved on one or more side and/or upper and/or lower facing walls.

4. System for fitting according to claim 2, **characterized in that** said one or more "dovetail" couplings (3, 4) comprise vertical or horizontal couplings.

5. System for fitting according to claim 4, wherein for each of said vertical "dovetail" couplings said blind trapeziform recess (4) of said first part starts at its widest part on the upper edge of the wall, continues on the wall with two convergent edges and ends on the same wall in a blind end, and wherein said trapeziform protuberance (3) starts at its widest part of the upper edge of the side wall, continues on the wall with two convergent edges, and ends on the same wall in a blind end.

6. System for fitting according to claim 4, wherein for each of said horizontal "dovetail" couplings said blind trapeziform recess (4) of said first part starts at its widest part on a side edge of the wall, continues on the wall with two convergent edges and ends on the same wall in a blind end, and wherein said trapeziform protuberance (3) starts at its widest part of a side edge of the side wall, continues on the wall with two convergent edges, and ends on the same wall in a blind end.

7. System for fitting according to any of the previous claims, **characterized in that** it comprises one or more extra supporting brackets (5) for the corresponding additional tanks.

8. Tank assembly for industrial or commercial vehicle, comprising at least one main tank (1) and one or more additional tanks (2) fitted together by means of said one or more coupling systems according to any of the claims from 2 to 7.

## Patentansprüche

1. Verfahren zum Anpassen eines oder mehrerer zusätzlicher Tanks an einen Tank eines industriellen oder gewerblichen Fahrzeugs, wobei das Verfahren mittels einer oder mehrerer "Schwalbenschwanz"-Kopplungen zwischen dem Tank (1) und dem einen oder mehreren zusätzlichen Tanks (2) erreicht wird, auf einer oder mehrerer einander zugewandten Wände zwischen dem Tank und einem oder mehreren zusätzlichen Tanks, **dadurch gekennzeichnet, dass** für mindestens eine Kopplung:
- einer der Teile der Kopplung eine verdeckte trapezförmige Ausnehmung in einer Seitenwand des Tanks (1) aufweist, die an ihrem breitesten Teil an einer Kante der Wand beginnt, sich auf der Wand mit zwei konvergierenden Kanten fortsetzt, und an der gleichen Wand in einer Sackgasse endet, wobei die konvergierenden Wände geformt sind, um eine Kopplung zu erreichen, indem sie mit einer kerbe-artigen Ausnehmung mit Bezug zu den äußeren Kanten vorgesehen sind;
- der andere Teil der Kopplung eine Form an einer Seitenwand an dem zusätzlichen Tank (2) aufweist, die zu der von der Wand von dem Tank (1) komplementär ist, wobei die Wand von dem zusätzlichen Tank mit einem trapezförmigen Vorsprung (3) vorgesehen ist, der an seinem breitesten Teil von einer Kante der Seitenwand beginnt, sich auf der Wand mit zwei konvergierenden Kanten fortsetzt, und an der gleichen Wand in einer Sackgasse endet, wobei die konvergierenden Seitenwände geformt sind, um eine Kopplung zu erreichen, indem sie mit divergierenden erhöhten Vorsprüngen, die komplementär zu der kerbe-artigen Ausnehmung an dem Haupttank sind, vorgesehen sind.

2. System zum Anpassen eines oder mehrerer zusätzlicher Tanks an einen Tank eines industriellen oder gewerblichen Fahrzeugs, wobei das System eine oder mehrere "Schwalbenschwanz"-Kopplungen (3, 4) zwischen dem Tank (1) und dem einen oder mehreren zusätzlichen Tanks (2) aufweist, auf einer oder mehrerer einander zugewandten Wände zwischen dem Tank und einem oder mehreren zusätzlichen Tanks, **dadurch gekennzeichnet, dass** mindestens eine von den Kopplungen (3, 4) aufweist:
- einen ersten Teil, der eine verdeckte trapezförmige Ausnehmung in einer Seitenwand des Tanks (1) aufweist, die an ihrem breitesten Teil an einer Kante der Wand beginnt, sich auf der Wand mit zwei konvergierenden Kanten fortsetzt, und an der gleichen Wand in einer Sackgasse endet, wobei die konvergierenden Wände geformt sind, um eine Kopplung zu erreichen, indem sie mit einer kerbe-artigen Ausnehmung mit Bezug zu den äußeren Kanten vorgesehen sind;
- einen zweiten Teil, der eine Form an einer Seitenwand an dem zusätzlichen Tank (2) aufweist, die zu der von der Wand von dem Tank (1) komplementär ist, wobei die Wand von dem zusätzlichen Tank mit einem trapezförmigen Vorsprung (3) vorgesehen ist, der an seinem breitesten Teil von einer Kante der Seitenwand beginnt, sich auf der Wand mit zwei konvergierenden Kanten fortsetzt, und an der gleichen Wand in einer Sackgasse endet, wobei die konvergierenden Seitenwände geformt sind, um eine Kopplung zu erreichen, indem sie mit divergierenden erhöhten Vorsprüngen, die komplementär zu der kerbe-artigen Ausnehmung an dem Haupttank sind, vorgesehen sind.

3. System zum Anpassen nach Anspruch 2, **dadurch gekennzeichnet, dass** die eine oder mehreren Kopplungen (3, 4) an einer oder mehreren Seiten und/oder oberen und/oder unteren einander zugewandten Wände erreicht werden.

4. System zum Anpassen nach Anspruch 2, **dadurch gekennzeichnet, dass** die eine oder mehreren "Schwalbenschwanz"-Kopplungen (3, 4) vertikale oder horizontale Kopplungen aufweisen.

5. System zum Anpassen nach Anspruch 4, wobei für jede von den vertikalen "Schwalbenschwanz"-Kopplungen die verdeckte trapezförmige Ausnehmung (4) von dem ersten Teil an ihrem breitesten Teil an der oberen Kante von der Wand beginnt, sich an der Wand mit zwei konvergierenden Kanten fortsetzt, und an der gleichen Wand in einer Sackgasse endet, und wobei der trapezförmige Vorsprung (3) an seinem breitesten Teil von der oberen Kante der Seitenwand beginnt, sich auf der Wand mit zwei konvergierenden Kanten fortsetzt, und an der gleichen Wand in einer Sackgasse endet.

6. System zum Anpassen nach Anspruch 4, wobei für jede von den horizontalen "Schwalbenschwanz"-Kopplungen die verdeckte trapezförmige Ausnehmung (4) von dem ersten Teil an ihrem breitesten Teil an einer Seitenkante von der Wand beginnt, sich an der Wand mit zwei konvergierenden Kanten fortsetzt, und an der gleichen Wand in einer Sackgasse endet, und wobei der trapezförmige Vorsprung (3) an seinem breitesten Teil von einer Seitenkante der Seitenwand beginnt, sich auf der Wand mit zwei konvergierenden Kanten fortsetzt, und an der gleichen Wand in einer Sackgasse endet.

7. System zum Anpassen nach einem der vorhergehenden Ansprüche, **dadurch gekennzeichnet, dass** es einen oder mehrere zusätzliche Tragbügel (5) für die entsprechenden zusätzlichen Tanks aufweist.

8. Tankanordnung für ein industrielles oder gewerbliches Fahrzeug, aufweisend mindestens einen Haupttank (1) und einen oder mehrere zusätzliche Tanks (2), die mittels der einen oder mehreren Kopplungssysteme nach einem der Ansprüche 2 bis 7 zusammengefügt sind.

## Revendications

1. Procédé d'ajustement d'un ou plusieurs réservoirs supplémentaires sur un réservoir d'un véhicule industriel ou commercial, ledit procédé étant obtenu à l'aide d'un ou de plusieurs couplages « en queue-d'aronde » entre ledit réservoir (1) et ledit un ou lesdits plusieurs réservoirs supplémentaires (2), sur une ou plusieurs parois frontales entre ledit réservoir et un ou plusieurs réservoirs supplémentaires, **caractérisé en ce que** pour au moins un couplage :
- une partie du couplage comprend un évidement trapézoïdal borgne dans une paroi latérale dudit réservoir (1) qui débute sur sa partie la plus large sur une arête de la paroi, continue sur la paroi par deux arêtes convergentes et se termine sur la même paroi dans une extrémité borgne, des parois convergentes étant formées de sorte à obtenir un couplage, dans lequel elles sont dotées d'un évidement de type encoche par rapport aux arêtes extérieures ;
- l'autre partie du couplage comprend une forme sur une paroi latérale sur le réservoir supplémentaire (2) qui est complémentaire à celle de la paroi du réservoir (1), ladite paroi du réservoir supplémentaire étant dotée d'une saillie (3) trapézoïdale qui débute sur sa partie la plus large sur une arête de la paroi latérale, continue sur la paroi par deux arêtes convergentes et se termine sur la même paroi dans une extrémité borgne, les parois latérales convergentes étant formées de sorte à obtenir un couplage, dans lequel elles sont dotées de saillies relevées différemment, complémentaires à l'évidement de type encoche sur le réservoir principal.

2. Système pour l'ajustement d'un ou plusieurs réservoirs supplémentaires sur un réservoir d'un véhicule industriel ou commercial, ledit système comprenant un ou plusieurs couplages « en queue-d'aronde» (3, 4) entre ledit réservoir (1) et ledit un ou lesdits plusieurs réservoirs supplémentaires (2), sur une ou plusieurs parois frontales entre ledit réservoir et un ou plusieurs réservoirs supplémentaires, **caractérisé en ce qu'**au moins l'un desdits couplages (3, 4) comprend :
- une première partie comprenant un évidement trapézoïdal borgne dans une paroi latérale dudit réservoir (1) qui débute sur sa partie la plus large sur une arête de la paroi, continue sur la paroi par deux arêtes convergentes et se termine sur la même paroi dans une extrémité borgne, des parois convergentes étant formées de sorte à obtenir un couplage, dans lequel elles sont dotées d'un évidement de type encoche par rapport aux arêtes extérieures ;
- une seconde partie comprenant une forme sur une paroi latérale sur le réservoir supplémentaire (2) qui est complémentaire à celle de la paroi du réservoir (1), ladite paroi du réservoir supplémentaire étant dotée d'une saillie (3) trapézoïdale qui débute sur sa partie la plus large sur une arête de la paroi latérale, continue sur la paroi par deux arêtes convergentes et se termine sur la même paroi dans une extrémité borgne, les parois latérales convergentes étant formées de sorte à obtenir un couplage, dans lequel elles sont dotées de saillies relevées différemment, complémentaires à l'évidement de type encoche sur le réservoir principal.

3. Système pour l'ajustement selon la revendication 2, **caractérisé en ce que** ledit un ou plusieurs couplages (3, 4) sont obtenus sur une ou plusieurs parois frontales latérales et/ou supérieures et/ou inférieures.

4. Système pour l'ajustement selon la revendication 2, **caractérisé en ce que** ledit un ou plusieurs couplages (3, 4) « en queue-d'aronde » comprennent des couplages verticaux ou horizontaux.

5. Système pour l'ajustement selon la revendication 4, dans lequel pour chacun desdits couplages verticaux « en queue-d'aronde », ledit évidement trapézoïdal borgne (4) de ladite première partie débute sur sa partie la plus large sur l'arête supérieure de la paroi, continue sur la paroi par deux arêtes convergentes et se termine sur la même paroi dans une extrémité borgne, et dans lequel ladite saillie trapézoïdale (3) débute sur sa partie la plus large sur l'arête supérieure de la paroi latérale, continue sur la paroi par deux arêtes convergentes et se termine sur la même paroi dans une extrémité borgne.

6. Système pour l'ajustement selon la revendication 4, dans lequel pour chacun desdits couplages horizontaux « en queue-d'aronde », ledit évidement trapézoïdal borgne (4) de ladite première partie débute sur sa partie la plus large sur une arête latérale de la paroi, continue sur la paroi par deux arêtes convergentes et se termine sur la même paroi dans une extrémité borgne, et dans lequel ladite saillie trapézoïdale (3) débute sur sa partie la plus large sur une arête latérale de la paroi latérale, continue sur la paroi par deux arêtes convergentes et se termine sur la même paroi dans une extrémité borgne.

7. Système pour l'ajustement selon l'une quelconque des revendications précédentes, **caractérisé en ce qu'**il comprend une ou plusieurs pattes d'attache (5) supplémentaires pour les réservoirs supplémentaires correspondants.

8. Ensemble de réservoirs pour un véhicule industriel ou commercial, comprenant au moins un réservoir principal (1) et un ou plusieurs réservoirs supplémentaires (2) montés ensemble à l'aide de l'un ou plusieurs systèmes de couplage selon l'une quelconque des revendications 2 à 7.
